# EUROPÄISCHE PATENTSCHRIFT

(11) **EP 3 094 021 B1**
(45) Veröffentlichungstag und Bekanntmachung des Hinweises auf die Patenterteilung: **27.09.2017**
(21) Anmeldenummer: 16169136.5
(22) Anmeldetag: 11.05.2016
(51) Int. Cl.: H04B 17/21

(54) **SYSTEM ZUR BEARBEITUNG VON TELEKOMMUNIKATIONSIGNALEN**
SYSTEM FOR PROCESSING OF TELECOMMUNICATION SIGNALS
DISPOSITIF DESTINÉ AU TRAITEMENT DE SIGNAUX DE TÉLÉCOMMUNICATION

(30) Priorität: 12.05.2015 ES 201500370; 12.05.2015 ES 201500371
(43) Veröffentlichungstag der Anmeldung: 16.11.2016
(73) Patentinhaber: Televés, S.A., 15706 Santiago de Compostela (ES)
(72) Erfinder: FERNANDEZ CARNERO, José Luis, 15706 Santiago de Compostela (ES); BLANCO QUEIRO, Elisardo, 15706 Santiago de Compostela (ES)
(74) Vertreter: Dosterschill, Peter

(56) Entgegenhaltungen:
- EP-A1- 1 631 079
- EP-A1- 2 533 559
- US-A1- 2014 269 375

## Beschreibung

Die vorliegende Erfindung betrifft ein System zur Bearbeitung von Telekommunikationssignalen, insbesondere von Fernsehsignalen nach dem Oberbegriff des Patentanspruchs 1.

Die Anforderungen an das radioelektrische Spektrum steigen bei allen Beteiligten, die Telekommunikationsdienste (Sprache, Daten, Video, ...) anbieten, was eine möglichst effiziente und produktive Nutzung dieses Medium erfordert. Aus diesem Grund tendiert man heutzutage nicht mehr wie früher dazu, ein statisches Spektrum zu verwenden (wie dies seit vielen Jahren erfolgt ist), sondern Techniken wie den gemeinsamen Spektrum-Zugang "share spectrum access" zu verwenden, wobei zwei oder mehr drahtlose Anwendungen autorisiert sind, dieselben Frequenzen in nicht ausschließlicher Form zu verwenden.
So funktionieren beispielsweise die Systeme "White Spaces" (die üblicherweise mit der Abkürzung WSD bezeichnet werden), wobei die Systeme, die mit der Charakteristik Geolokalisierung ausgestattet sind, mittels Zugangs auf eine Datenbasis bestimmen können, welche Frequenzbänder und welche Leistungen während welcher Zeitintervalle benutzt werden können.
Von Anbeginn der Nutzung des radioelektrischen Spektrums haben alle Maßnahmen gegen Störungen absolute Priorität unter Beachtung aller Empfehlungen und Spektrumzuordnungen bis zum heutigen Tage. Jedoch führen die Kosten dieser Maßnahmen dazu, dass Spektrum weniger benutzt wird, um störungsfreie Kanäle zu schaffen. Daher bewegen sich die derzeitigen Empfehlungen in Richtung allgemeiner Autorisierungen, dies über Konzessionen und agile Bestimmungen des Spektrums. Mit anderen Worten besteht eine Möglichkeit, Techniken des autorisierten geteilten Zugangs (ASA) und des geteilten Zugangs mit Lizenz (LSA) zu entwickeln, wobei diese Techniken mit traditionellen Elementen der kognitiven Zuordnung der Frequenzen und Radiotechniken kombiniert werden.

Die Anwendung dieser Techniken verpflichtet zu einem besseren Schutz der Dienste, die als Pflichtdienste bezeichnet werden. Der Fall, auf den sich die vorliegende Erfindung bezieht, ist der Pflichtdienst des digitalen terrestrischen Fernsehens (TDT).

Das TDT hat traditionell die Frequenzbänder des VHF und des UHF benutzt. Jedoch haben die Abkommen, abgeleitet von WRC0 2007 (World Radio Communications 2007) die Kanäle 61-69 des UHF-Bandes den Diensten der Mobiltelefonie der 4. Generation zugeordnet. Andererseits diskutiert man in WRC15, ob auch die Frequenzen zwischen 694 und 790 MHz sowohl der Mobiltelefonie als auch dem TDT zugeordnet werden. Gleichzeitig unternehmen verschiedene Länder Schritte, um eine geringe Nutzung des Spektrums zu vermeiden, insbesondere hinsichtlich jener Kanäle, die durch die Planung der Frequenzen nicht in den Gebrauch im nationalen oder regionalen Bereich kommen können, die aber für Anwendungen im lokalen Bereich in Frage kommen können.

Andererseits sind Signalbearbeitungsverfahren für Fernsehsignale in Netzen individueller oder kollektiver Bearbeitung (SATV/SMATV-Netze) bekannt, die aus Aufnahmeelementen (Antennen) bestehen, aus Elementen der Prozessbearbeitung und der Verstärkung (Kopfeinheit) und aus Elementen der Verteilung (Netz der Bearbeitung). Wie auch bekannt ist, entsprechen die Verstärkungselemente der Kopfeinheit drei Typen der Verstärkung, Breitband-Verstärkung, Monokanal-Verstärkung und programmierbare Verstärkung.

Ausgehend von der vorgenannten Zuordnung des Frequenzbandes UHF bis zur Mobiltelefonie der 4. Generation hat man zu vormaligen Elementen die Elemente zur Elimination der Störungen hinzugefügt, die, allerdings nicht in abschließender Form, Filterelemente, Prozesselemente oder andere Techniken wie Transmodulation oder Veränderung der Technologie der Verarbeitung (TDT über Satellit) umfassen.

Einige dieser Techniken oder Elemente, die Störungen beseitigen, werden in vielen Fällen, vorsorglich eingesetzt und es kann geschehen, dass sie sich nach einer späteren Verbreitung der Datendienste als unzureichend herausstellen, dies wie zuvor beschrieben mittels statischer oder dynamischer Zuordnungen des Spektrums.

Aus WO 2011/161582 mit der Bezeichnung "Setting up installation parameters in a televisión receiver" ist ein Verfahren zur automatischen Installation von Kanälen in einem Fernsehempfangsgerät bekannt. Dieses Verfahren umfasst die geographische Bestimmung des Fernsehempfangsgeräts und den Zugriff auf einen Kanalplan des Betreibers beziehungsweise der Betreiber. Jedoch beschreibt das Verfahren weder eine Analyse der Qualitätsparameter der Eingangssignale noch mögliche Aktionen hinsichtlich nicht erwünschter Störungen.

Aus WO 92/08990 ist ein so bezeichneter "preisgünstiger tragbarer HF-Spektrum-Analyzer mit Kalibrierungseigenschaften" bekannt, der mittels eines Mikroprozessors eine automatische Kalibrierung hinsichtlich Variationen der Amplitude von Bandpassen vornimmt.

Aus der US 5,073,930 ist ein Verfahren und ein System zum Empfang und zur Verteilung von satellitenübertragenen Fernsehsignalen bekannt. Das System weist eine Transponderumwandler-Einheit auf, die im Frequenzbereich einer typischen Umwandlung von 950 - 1450 MHz arbeitet und eine Konfiguration der Kopfeinheit ermöglicht, mit der Transponder von einem oder mehreren Satelliten mit horizontaler oder vertikaler Polarisierung ausgewählt werden.

Aus EP 1 631 079 A1 ist eine mobile Fernsehempfangseinheit und ein Verfahren zum automatischen Identifizieren des Übertragungsstandards von Rundfunk-Fernseh-Signalen bekannt. Die Fernsehempfangseinheit weist eine Identifikationsschaltung zur eindeutigen Bestimmung des Übertragungsstandards auf Basis von Ergebnissen einer Frequenzspektrum-Analyse-Einheit auf. Das Verfahren basiert auf einer "signal envelope"-Analyse, ohne dass eine Demodulation oder ein Dekodieren erfolgt.

Aus US 2014/269375 sind Systeme, Verfahren und Vorrichtungen zum elektronischen Spektrum-Management bekannt. Dabei werden Signale und Signalparameter identifiziert. Dem Benutzer werden verfügbare Frequenzen angezeigt. Protokolle von Signalen können ebenfalls identifiziert werden.

Aus EP 2 533 559 A1 ist ein System und ein Verfahren zur Implementierung einer kognitiven Funkvorrichtung unter Verwendung von Spektrumerfassung und Aufenthaltsinformation bekannt. Das bekannte System umfasst eine Datenbank für Ortskennungs-/kognitive Funkkanal-Tabelleninformationen, um eine Karte verfügbarer Spektren zu erstellen.

Der Erfindung liegt die Aufgabe zugrunde, ein System zur Bearbeitung von Telekommunikationssignalen, insbesondere von Fernsehsignalen, der eingangs genannten Art zu schaffen, das diese Signale in Abhängigkeit des jeweiligen Orts, an dem sich das System befindet, als gewünschte Signale oder als nicht gewünschte Signale identifiziert und klassifiziert, und das weiterhin die Qualität ausgewählter, empfangener Signale verbessert.

Diese Verbesserung der Signale betrifft zum einen die Signalpegel und zum anderen Qualitätsparameter.
Signalpegel bezeichnet beispielsweise und damit nicht einschränkend, eine Leistung (W, mW, dBm, etc) oder eine Spannung (V, mV, dBmV, µV, dBµV, etc.) des Werts RMS des Signals oder des Maximalwerts des Signals.
Qualitätsparameter sind beispielsweise, ohne eine Einschränkung, MER (Modulation Error Rate") und/oder SNR (Signal to Noise Relation) und/oder CBER (Channel Bit Error Rate) und/oder VBER (Viterbi Error Rate).

Diese Aufgabe wird durch ein System gelöst, das durch die Ansprüche definiert ist.

Das erfindungsgemäße System zeichnet sich durch eine Vielzahl von Vorteilen aus, die unter anderen bei der Installation des Systems und bei einer Rekonfigurierung des Systems zum Tragen kommen.

Das erfindungsmäße System zur Bearbeitung von Telekommunikationssignalen, insbesondere von Fernsehsignalen, weist wenigstens einen Telekommunikationssignal-Eingang mit wenigstens einem anliegenden Signal, wenigstens einen Bezugseingang mit wenigstens einem dort anliegenden Signal auf, wobei das wenigstens eine am Bezugseingang anliegende Signal am Telekommunikationssignal-Eingang anliegt, sowie eine Steuereinheit auf. Weiterhin weist das erfindungsgemäße System eine Spektralanalyse-Einheit auf, die eine Karte des radioelektrischen Spektrums von Signalen liefert, die am Bezugseingang anliegen. Das System enthält Daten, die den geografischen Ort des Systems bezeichnen, sowie eine erste Information, die an diesem geografischen Ort vorhandene radioelektrische Dienste bezeichnet. Die Steuereinheit ist in der Weise ausgestaltet, dass sie am Bezugseingang anliegende Telekommunikationssignale identifiziert und diese als gültige oder störende Signale klassifiziert. Das Klassifizieren erfolgt in einer ersten Alternative ausgehend von der Karte des radioelektrischen Spektrums der am Bezugseingang anliegenden Signale und der ersten Information der an diesem geografischen Ort vorhandenen radioelektrische Dienste. In einer zweiten Alternative erfolgt das Klassifizieren ausgehend von einer zweiten, vorab generierten Information, die am Bezugseingang anliegende Telekommunikationssignale identifiziert und diese als gültige oder störende, am Bezugseingang anliegende Signale klassifiziert.

Ausgehend von den Daten des geographischen Orts des Systems, wobei diese Daten im System selbst vorliegen können, oder beispielsweise aus einem externen GPS-System oder Internet über die Verbindung mit einem Dienst, der eine Geopositionierung vornimmt, wählt das System die den radioelektrischen Diensten an diesem geographischen Ort entsprechende Information (I1). Mittels dieser Information und der Karte des radioelektrischen Spektrums, das von der Spektralanalysen-Einheit generiert beziehungsweise geliefert wird, bestimmt die Steuereinheit, welches Signal oder welche Signale, das oder die am Referenzeingang anliegen, als gewünschtes Signal oder als nicht gewünschtes Signal identifiziert und klassifiziert werden müssen.
Beispielsweise, und ohne eine Einschränkung, kann diese Information (I1) zu den radioelektrischen Diensten den Daten entsprechen, die von Telekommunikationsdienstbetreibern geliefert werden, wobei diese Daten die übermittelten Dienste und die Frequenzen/Kanäle der Übermittlung dieser Dienste bezeichnen oder Informationen über "White Spaces" in unterschiedlichen geographischen Gebieten. Diese Information kann in der eigentlichen Steuereinheit oder an einem Ort außerhalb der Steuereinheit vorhanden sein, so beispielsweise in einer Datenbasis.

Alternativ hierzu kann die Steuereinheit die am Eingang des Systems anliegenden Telekommunikationssignale als gewünschte Signale oder als nicht gewünschte Signale klassifizieren, ausgehend von einer zuvor generierten Information I2. Diese Information kann beispielsweise, ohne irgendeine Einschränkung, einer Liste der Telekommunikationskanäle entsprechen, die als gewünscht identifiziert sind, und/oder einer Liste der Telekommunikationskanäle, die als nicht gewünscht identifiziert sind, die wiederum in der Steuereinheit gespeichert werden können oder an einem Ort außerhalb der Steuereinheit (zum Beispiel in einer Datenbasis). Diese Information I2 kann auch durch den Benutzer direkt in das System über eine Benutzerschnittstelle eingegeben werden.

Damit wird der Vorteil erzielt, dass das System die Klassifizierung der am Benutzereingang anliegenden Signale als gewünschte Signale oder als nicht gewünschte Signale ermöglicht, dies unabhängig von der physischen Anordnung des Systems, ausgehend von einem vorgebbaren Kriterium (beispielsweise, ohne irgendeine Einschränkung, Signale des digitalen terrestrischen Fernsehens), das durch einen Algorithmus in der Steuereinheit implementiert werden kann, der auch vom eigentlichen Benutzer eingegeben werden kann.

In vorteilhafter Weise werden im erfindungsgemäßen System Techniken eingesetzt, die proaktiv und bei der Elimination von Störungen in den Fernsehsignalen in den Elementen der Kopfeinheit beispielsweise in MATV/SMATV-Netzen effizienter sind. Diese Techniken sind im Gegensatz zu herkömmlichen statischen Techniken (in der Mehrzahl der Fälle am Ort mittels eines Tiefpasses oder eines Sperrpass-Filters) lernfähig beziehungsweise adaptiv. Vorteilhaft ist auch, dass Kopfeinheiten der MATV/SMATV-Netze Elemente aufweisen, die proaktiv beziehungsweise vorausplanend die möglichen Störquellen erkennen und die die vollständige Beseitigung der Störungen bewirken. Alternativ hierzu erfolgt eine partielle Migration der Störung, damit die unbedingt erforderlichen Signale mit einem Minimum an Qualität empfangen beziehungsweise weiter verarbeitet werden können.

Das erfindungsgemäße Systems weist wenigstens einen Ausgang auf, wobei die Steuereinheit in der Weise ausgestaltet ist, dass sie auf eine Einheit zur Signalauswahl und Signalanpassung wirkt. Diese Einheit zur Signalauswahl und Signalanpassung ist in der Weise ausgestaltet, dass sie die am Eingang des Systems anliegenden Telekommunikationssignale identifiziert und diese als gewünschte oder nicht gewünschte, am Eingang des Systems anliegende Signale klassifiziert, und dass sie diese Telekommunikationssignale mit Signalpegeln und vorgegebenen Qualitätsparametern versieht, damit diese Telekommunikationssignale wenigstens einem Ausgang des Systems zugeführt werden. Diese Signalpegel und Qualitätsparameter können vordefiniert sein oder über eine Benutzerschnittstelle von außen eingegeben werden.
Damit wird der Vorteil erzielt, dass das System ein Verteilungssystem für Signale darstellt, wobei in diesem System die Signale auch bearbeitet werden. Dies kann beispielsweise, ohne irgendeine Einschränkung, eine Fernseh-Kopfeinheit sein, in der die Signale als gültige Signale ausgewählt werden, die an das Verteilungsnetz angepasst werden sollen, während störende Signale nicht angepasst werden, wobei die am Ort des Systems verteilten Fernsehdienste berücksichtigt werden.

Die erste Information I1, die die radioelektrischen Dienste bezeichnet, kann in einer Datenbasis gespeichert werden, womit der Vorteil erzielt wird, dass bei einer Änderung in den Übermittlungsdiensten eine entsprechende Aktualisierung in der Datenbasis erfolgen kann. Diese Datenbasis kann intern sein (zum Beispiel ein EEPROM-Speicher) oder systemextern sein (zum Beispiel ein externer Server, auf den über eine Breitbandverbindung zugegriffen wird).

In einem weiteren vorteilhaften Ausführungsbeispiel der Erfindung verfügt das System über eine zweite Datenbasis mit zweiten Daten zu Installationen. Die zweite Datenbasis enthält für jedes bestimmte System eine zweite Information I2 zu Signalen, die als gewünschte oder nicht gewünschte, am Bezugseingang anliegende Telekommunikationssignale identifiziert und klassifiziert sind. "Installationen" bezeichnet unterschiedliche Orte, für die Daten zu gewünschten beziehungsweise nicht gewünschten Signalen abgespeichert sind.

Damit wird der Vorteil erzielt, dass es ermöglicht wird, alle Systeme fern zu betreiben und fern zu konfigurieren, dies mittels der Eingabe einer Information zu gewünschten und nicht gewünschten Signalen für jedes bestimmte System in die Datenbasis. Dies gilt auch, wenn ein Konfigurationsproblem in dem System auftritt beziehungsweise zum Beispiel, wenn Daten zu der geographischen Anordnung und/oder eine Information I1 über radioelektrische Dienste an diesem geographischen Ort fehlen.

Ein weiteres vorteilhaftes Ausführungsbeispiel der Erfindung ist dadurch gekennzeichnet, dass das System eine Einheit zur Messung der Qualität von Eingangssignalen aufweist, wobei diese Einheit eine Information erzeugt, die Signalpegel und/oder Qualitätsparameter (zum Beispiel Identifikation der Kanäle/Dienste TDT, CBER, VBER, SNR, MER, etc.) der Telekommunikationssignale bezeichnet, die am Eingang des Systems anliegen und als gewünschte Signale identifiziert und klassifiziert sind. Damit wird der Vorteil erzielt, dass diese Information durch die Steuereinheit genutzt werden kann, um auf die Einheit zur Signalauswahl und Signalanpassung zu wirken, die die Signale mit Pegeln versieht sowie mit vorgebbaren Qualitätsparametern, damit die Signale dem wenigstens einen Ausgang OUT des Systems zugeführt werden können.

Ein weiteres vorteilhaftes Ausführungsbeispiel der Erfindung ist dadurch gekennzeichnet, dass das System eine Einheit zur Messung der Qualität von Ausgangssignalen aufweist, wobei diese Einheit eine Information erzeugt, die Signalpegel und/oder Qualitätsparameter (zum Beispiel Identifikation der Kanäle/Dienste TDT, CBER, VBER, SNR, MER, etc.) der Telekommunikationssignale bezeichnet, die an wenigstens einem Ausgang des Systems anliegen und als gewünschte Signale identifiziert und klassifiziert sind. Damit wird der Vorteil erzielt, dass diese Information durch die Steuereinheit genutzt werden kann, um auf die Einheit zur Signalauswahl und Signalanpassung zu wirken, die die Signale mit Pegeln versieht sowie mit vorgebbaren Qualitätsparametern, damit die Signale wenigstens einem Ausgang OUT des Systems zugeführt werden können.

Ein weiteres vorteilhaftes Ausführungsbeispiel der Erfindung ist dadurch gekennzeichnet, dass die Steuereinheit in der Weise ausgestaltet ist, dass sie auf eine Einheit zur Signalauswahl und Signalanpassung wirkt, dies in Abhängigkeit der Information, die von der Einheit zur Messung der Qualität von Eingangssignalen und/oder die von der Einheit zur Messung der Qualität von Ausgangssignalen generiert wird.

Die Benutzung der Information, die die Einheit zur Messung der Qualität von Eingangssignalen generiert, zusammen mit der Information, die die Einheit zur Messung der Qualität von Ausgangssignalen generiert, durch die Steuereinheit erhöht die Möglichkeit, Steuerungs-Algorithmen zu implementieren, die sehr viel agiler und wirksamer für die Auswahl und die Anpassung der Signale sind.

Ein weiteres vorteilhaftes Ausführungsbeispiel der Erfindung ist dadurch gekennzeichnet, dass die Einheit zur Messung der Qualität von Eingangssignalen und die Einheit zur Messung der Qualität von Ausgangssignalen identisch ausgestaltet beziehungsweise identisch sind. Damit lässt sich das System gemäß der Erfindung in vorteilhafter Weise implementieren.

Ein weiteres vorteilhaftes Ausführungsbeispiel der Erfindung ist dadurch gekennzeichnet, dass die Einheit zur Signalauswahl und Signalanpassung die folgenden vier Einheiten aufweist, eine Einheit zur Vorverstärkung und Vorfilterung, eine Prozessoreinheit, eine Einheit zum Filtern und zur Equalifizierung und eine Verstärkungseinheit
- wobei die Einheit zur Vorverstärkung und Vorfilterung, Elemente aufweist, die Signale ausfiltern, die als nicht gewünschte Signale identifiziert und klassifiziert sind, und die Signale, die als gewünschte Signale identifiziert und klassifiziert sind, anpassen;
- wobei die Prozessoreinheit Elemente aufweist, die in vorgebbaren Fällen Operationen ausführen, mit denen die Qualität der Signale, die als gewünschte Signale identifiziert und klassifiziert sind, entsprechend einer vorgebbaren Qualität angepasst wird,
- wobei die Einheit zum Filtern und zur Equalifizierung (Entzerrung) eine Filtereinheit aufweist und Elemente aufweist, mit denen mittels eines selektiven Filterns die vorhandenen Signale, die als gewünschte Signale identifiziert und klassifiziert sind, ausgewählt werden, und die später einem Equalifizierungsprozess und/oder einem Pre-emphaseprozess unterzogen werden, und
- wobei die Verstärkungseinheit Elemente aufweist, die die als gewünscht identifizierten und klassifizierten Signale mit einem vorgebbaren Pegel versehen.

Damit wird der Vorteil erzielt, dass der Steuereinheit die Flexibilität verliehen wird, auf die Einheiten 41 und/oder 42 und/oder 43 und/oder 44 zu wirken, um am Ausgang des Systems die am Eingang IN des Systems anliegenden Signalen, die als gewünscht identifiziert und klassifiziert sind, mit vorgebbaren Signalpegeln zu versehen.

Ein weiteres vorteilhaftes Ausführungsbeispiel der Erfindung ist dadurch gekennzeichnet, dass das System eine Geolokalizierungseinheit aufweist, die der Steuereinheit eine Information über den (aktuellen) geographischen Ort des Systems zuführt. Diese Geolokalisierungseinheit kann in das eigentliche System integriert sein (beispielsweise ein GPS-Modul), die Geolokalizierungseinheit kann auch für mehrere Systeme vorgesehen sein (beispielsweise Google maps). Damit wird der Vorteil erzielt, dass die Steuereinheit die Geolokalizierungseinheit jederzeit den physischen Ort des Systems abfragen kann, womit die Notwendigkeit entfällt, die entsprechende Information abzuspeichern

Ein weiteres vorteilhaftes Ausführungsbeispiel der Erfindung ist dadurch gekennzeichnet, dass das System eine Benutzer-Schnittstelle aufweist, die in der Weise ausgestaltet ist, dass sie der Steuereinheit eine systemexterne Information liefert, um am Bezugseingang anliegende Telekommunikationssignale zu identifizieren und diese als gewünschte oder nicht gewünschte Signale zu klassifizieren.

Damit wird der Vorteil erzielt, dass die Möglichkeit geschaffen wird, eine zusätzliche und/oder eine alternative Information (I1) in die Karte der radioelektrischen Dienste einzufügen und/oder eine zuvor generierte Information (I2), die die am Eingang des Systems anliegenden Signale als gewünschte Signale oder als nicht gewünschte Signale identifiziert und klassifiziert, beispielsweise bei einer Deaktualisierung der Datenbasen, die die Information enthalten, oder bei einer Einfügung weiterer Kanäle, die anfänglich als nicht gewünschte Kanäle identifiziert worden sind.

Ein weiteres vorteilhaftes Ausführungsbeispiel der Erfindung ist dadurch gekennzeichnet, dass die Benutzerschnittstelle in der Weise ausgestaltet ist, dass die Information über die Signalpegel und/oder über Qualitätsparameter, die für die am Eingang des Systems anliegenden, als gewünschte Signale identifizierte und klassifizierte Telekommunikationssignale vozusehen sind, eingefügt werden kann, damit diese Telekommunikationssignale wenigstens einem Ausgang des Systems zugeführt werden.

Damit wird der Vorteil erzielt, dass externen Benutzern ermöglicht wird, eine gegenüber einer vorhandenen Konfiguration geänderte Konfiguration der Signalpegel und/oder der verschiedenen Qualitätsparameter hinsichtlich der Signale zu erstellen, die als gewünschte Signale identifiziert und klassifiziert sind, dies für jedes einzelne dieser Signale.

Ein weiteres vorteilhaftes Ausführungsbeispiel der Erfindung ist dadurch gekennzeichnet, dass die Benutzerschnittstelle eine Visualisierungseinheit aufweist, die Signalpegel und/oder Qualitätsparameter der Telekommunikationssignale anzeigt, die am Eingang und/oder am Ausgang des Systems anliegen.

Damit wird der Vorteil erzielt, dass ein externer Benutzer die Möglichkeit erhält, die Werte der Signalpegel und/oder der Qualitätsparameter der am Systemeingang und am Systemausgang anliegenden, als gewünschte Signale identifizierte und klassifizierte Signale visuell zur Kenntnis zu nehmen, unter anderem um Änderungen dieser Werte am Systemausgang je nach Bedarf vorzunehmen, ohne dass hierfür eine externe Vorrichtung wie beispielsweise ein Feldmessgerät benötigt wird.

Ein weiteres vorteilhaftes Ausführungsbeispiel der Erfindung ist dadurch gekennzeichnet, dass die erste Datenbasis und/oder die zweite Datenbasis Daten aufweist, die den geografischen Ort des Systems und/oder von der Spektralanalyseeinheit generierte Daten bezeichnen entsprechend der Karte der radioelektrischen Dienste und/oder Daten der Signalpegel und/oder der Qualitätsparameter der Telekommunikationssignale, die an dem Eingang des Systems und/oder am Ausgang des Systems anliegen.

Damit wird der Vorteil erzielt, dass kooperative Systeme geschaffen werden können. So kann beispielsweise im Fall der White Spaces jedes System Informationen übermitteln, die die radioelektrischen Dienste in seinem örtlichen Bereich betreffen. Vorteilhaft ist bei einer anderen Ausführungsform im Hinblick auf ein System mit globaler Bearbeitung von Systemen der Signalbearbeitung wie hier beschrieben, dass es ermöglicht wird, dass jedes System Informationen zu der (schaltungstechnischen) Konfiguration übermittelt, mit der die Signale als gewünschte oder als nicht gewünschte Signale identifiziert und klassifiziert werden, womit mögliches Rekonfigurieren vereinfacht wird.

Ein weiteres vorteilhaftes Ausführungsbeispiel der Erfindung ist dadurch gekennzeichnet, dass die am Eingang des Systems anliegenden Telekommunikationssignale Signale des digitalen terrestrischen Fernsehens sind.

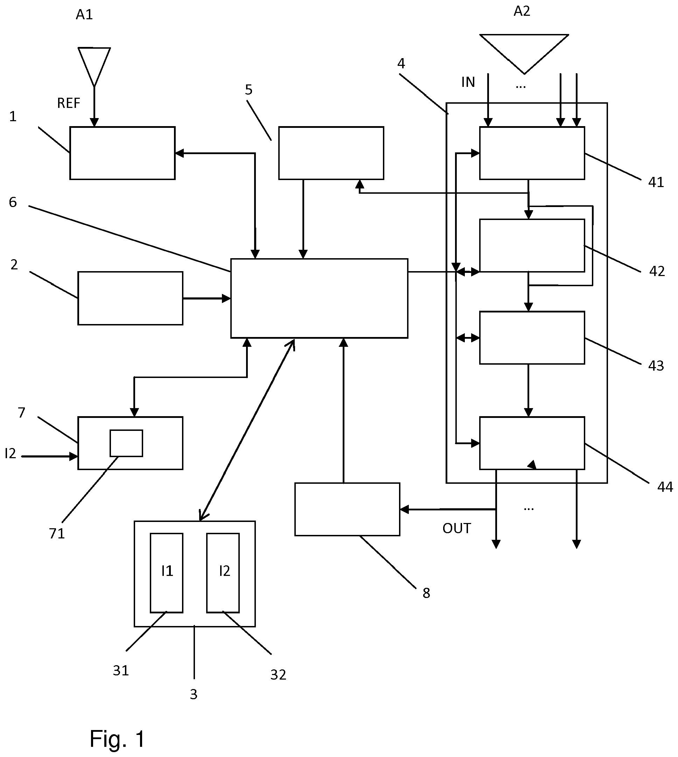

In einem weiteren Ausführungsbeispiel der Erfindung sind die Geolokalisierungseinheit 2 und/oder die Datenbasen 3, 31, 32 in einem externen System implementiert, das mit dem in Figur 1 dargestellten erfindungsgemäßen Systems über eine Benutzerschnittstelle 7 der Bearbeitung von Telekommunikationssignale kommuniziert. Beispielweise kann ein Mobiltelefefon, das mit einer GPS-Einheit ausgestattet ist und das Zugriff auf eine Datenbasis mit Daten radioelektrischer Dienste hat, eine Verbindung zu dem in Figur 1 dargestellten System über die Benutzerschnittstelle 7 drahtlos (WLAN, Bluetooth) herstellen oder auch über eine Kabelstruktur mittels einer USB-Verbindung.

Im Folgenden wird anhand der beigefügten Zeichnung beispielhaft, ohne eine Einschränkung, eine Ausführungsform des erfindungsgemäßen Systems zur Bearbeitung von Telekommunikationssignalen dargestellt.

Figur 1 zeigt ein Blockschaltbild des erfindungsgemäßen Systems zur Bearbeitung von Telekommunikationssignalen, insbesondere von Fernsehsignalen.

### Das System umfasst

- eine Geolokalisierungseinheit 2,
- eine Datenbasis 3, bestehend aus einer Datenbasis 31 mit Installationsdaten und einer Datenbasis 32 mit Daten zu radioelektrischen Installationen;
- eine Einheit 4 zur Signalauswahl und Signalanpassung, die folgende Einheiten aufweist
   - eine Einheit 41 zur Vorverstärkung und Vorfilterung,
   - eine Prozessoreinheit 42,
   - eine Einheit 43 zum Filtern und zur Equalifizierung, und
   - eine Verstärkungseinheit 44,
- eine Steuereinheit 6,
- eine Benutzerschnittstelle 7, die mit einem Visualisierungsmodul 71 ausgestattet ist, und
- eine Einheit 8, die die Qualität von Ausgangssignalen misst.

Das System weist eine Vielzahl von Eingängen IN für Telekommunikationssignale auf, sowie wenigstens einen Referenzeingang REF. Dieser Telekommunikationssignal-Eingang REF kann beispielsweise einer der Eingänge IN sein. Die Telekommunikationssignale am Bezugseingang REF bestehen aus allen Telekommunikationssignalen, die im Bereich des Orts des Systems vorliegen, sowohl erwünschte Signale als auch nicht gewünschte ("störende") Signale. Die Signale werden üblicherweise über Antennen empfangen, vorzugsweise über eine omnidirektionale Antenne (Richtstrahlantenne) A1, die mit dem Bezugseingang REF verbunden ist. Die Telekommunikationssignale an den Eingängen IN bestehen auch aus allen Telekommunikationssignalen, die im Bereich des Orts des Systems vorliegen, sowohl erwünschte Signale als auch nicht gewünschte Signale. Die Signale werden üblicherweise über Antennen empfangen, vorzugsweise über Richtantennen A2, die in Richtung des Ursprungs der Signale ausgerichtet sind, die als gewünschte Signale identifiziert und klassifiziert sind. Jedoch ist es möglich, dass A1 und A2 durch eine, dieselbe Antenne gebildet ist, die eine omnidirektionale Antenne oder eine Richtantenne sein kann. Die Telekommunikationssignale in diesem Ausführungsbeispiel sind, ohne eine Einschränkung, Signale des digitalen terrestrischen Fernsehens (TDT), die im örtlichen Bereich vorliegen und folglich hat wenigstens die Antenne A2 eine Antenne für den Empfang von TDT-Diensten zu sein.

Außerdem verfügt das System über mindestens einen Ausgang OUT für die Signale, die als gewünschte ("gültige") Signale identifiziert und klassifiziert sind, nachdem sie im erfindungsgemäßen System bearbeitet sind. Die Signale sind beispielsweise Signale des digitalen terrestrischen Fernsehens.

Am Bezugseingang REF des erfindungsgemäßen Systems ist eine Spektralanalyse-Einheit 1 angeordnet, die Techniken der Digitalisierung des radioelektrischen Spektrums benutzt, und eine Karte des radioelektrischen Spektrums generiert oder eine Karte der Signale, die in dem örtlichen Bereich des Systems zur Bearbeitung von Telekommunikationssignalen vorhanden sind. Auf diese Weise werden Fernsehdienste und andere Dienste (normalerweise Datendienste) erkannt, die im selben Band arbeiten wie die Fernsehsignale oder in benachbarten Bändern und die mögliche Störungen darstellen können.

Weiterhin verfügt das System über eine Geolokalisierungseinheit 2, die geographische Koordinaten des Systems bestimmt. Die Kombination der Karte der radioelektrischen Dienste, die von der Spektralanalyse-Einheit 1 erstellt wird, zusammen mit der Geolokalisierung, die von der Geolokalisierungseinheit 2 erstellt wird, sowie der Zugang auf eine Datenbasis 3 ermöglicht der Steuereinheit 6, die Signale als gewünschte Signale (TDT-Signale) zu identifizieren und zu klassifizieren oder als nicht gewünschte Signale (beispielsweise LTE-Signale, Signale gesendet in White Spaces). Diese Identifikation und Klassifikation stellt die Basis dar, um später den Rest der Einheiten zu steuern, die in dem System integriert sind.

Für den Fall, dass das System über einen Zugriff auf die Information I1 der radioelektrischen Dienste verfügt, sei es, dass diese Information systemintern gespeichert wird oder in einer Datenbasis 32 mit Daten zu radioelektrischen Diensten 32, so kann diese Information zur Erstellung einer radioelektrischen Karte beitragen, die eine dynamische Zuordnung des Spektrums im regionale oder lokalen Bereich unterstützt.

Wenn das System keine Verbindung zu einer Datenbasis 32 mit Daten radioelektrischer Dienste hat, so benutzt man zum Filtern/Reduzieren von Störungen einen Algorithmus, der in der Steuereinheit implementiert ist.

Das System verfügt über die Alternative, eine Information I1 über Signale zu erhalten, die als gewünschte Signale oder als nicht gewünschte Signale identifiziert und klassifiziert sind. Diese Information ist im System verfügbar, in der Datenbasis 31 der Installationsdaten, über die Benutzerschnittstelle 7, oder durch eine Kombination der drei Möglichkeiten. Außerdem hat das System die Möglichkeit, in diese Datenbasis 31 die Installationsdaten mit der Information entsprechend der Konfiguration hinsichtlich der als gewünscht oder nicht gewünscht identifizierten und klassifizierten Signale einzugeben. "Installationen" bezeichnet unterschiedliche Orte, für die Daten zu gewünschten beziehungsweise nicht gewünschten Signalen abgespeichert sind. So können beispielsweise die Kanäle 31, 45 und 56 als gewünscht klassifiziert sein und alle anderen Kanäle als nicht gewünscht.

Wie in Figur 1 dargestellt ist, ist jeder Eingang IN des Systems mit einer Einheit 4 zur Signalauswahl und Signalanpassung verbunden; die Einheit 4 besteht bei der in Figur 1 dargestellten Ausführungsform aus vier Einheiten, einer Einheit 41 zur Vorverstärkung und Vorfilterung, einer Prozessoreinheit 42, einer Einheit 43 und einer Verstärkungseinheit 44.

Die Einheit 41 zur Vorverstärkung und Vorfilterung nimmt eine vorherige Filterung (Vorfilterung) vor-und eine Bestätigung des Pegels des Eingangs der Signale. Diese Bestätigung des Pegels ermöglicht eine Anpassung der Pegel der Signale in Abhängigkeit des Ortes des Systems hinsichtlich der TDT-Übertrager. Diese Anpassung kann eine selektive Dämpfung oder eine selektive Verstärkung implizieren.

Diese Einheit 41 zur Vorverstärkung und Vorfilterung kann die notwendigen Schaltungselemente aufweisen, um die Störungen in den Kanälen zu eliminieren, die verteilt werden sollen.
Das Vorfiltern wird mittels eines notwendigen Algorithmus durchgeführt, der von der Steuereinheit 6 gesteuert wird, ein dynamisches Filtern, bei dem der Pegel der Qualität der gefilterten Signale in Abhängigkeit der Tiefe der durchgeführten Filterns gesteuert wird. Die Steuereinheit 6 empfängt das Ergebnis der Messung der Qualität der Eingangssignale des Ausgangs der Einheit 5, die die Qualität der Eingangssignale misst, und das Ergebnis der Messung der Qualität der Ausgangssignale des Ausgangs der Einheit 8, die die Qualität der Ausgangssignale misst, um die angemessenen Maßnahmen im Hinblick auf die erkannte Störung durchzuführen, wie beispielsweise, ohne jede Einschränkung, ein selektiveres Filtern, die Verwendung zusätzlicher Filterstufen oder Stufen für dynamisches Filtern.

So können in einer besonderen Anwendung für den Fall der Störung eines benachbarten Kanals zusätzliche Filterstufen eingesetzt werden, dies für kollidierende Zonen, die mögliche Störungsquellen darstellen, (zum Beispiel Kanäle, die in der Nähe der Frequenzen der ersten oder zweiten digitalen Dividende angeordnet sind). Auch lassen sich dynamische Bandsperren einfügen, die auch im Fall von Störungen zwischen den gewünschten Kanälen verwendet werden können, wie dies im Fall der dynamischen Zuordnungen der Frequenzen für WSD oder ähnliche Zuordnungen vorliegt.

Am Ausgang der Einheit 41 zur Vorverstärkung und Vorfilterung ist die Einheit 5 zur Messung der Qualität von Eingangssignalen angeordnet, wobei diese Einheiten der Steuereinheit 6 ermöglichen, den Umfang der Verbesserung zu bestimmen und den Benutzer über mögliche Maßnahmen zu informieren (beispielsweise eine andere Anordnung der Empfangsantennen), um bestmöglich die Qualität der Eingangssignale zu verbessern.

Die Einheit 5 zur Messung der Qualität von Eingangssignalen ermöglicht der Steuereinheit 6 auch, Entscheidungen hinsichtlich nachgeschalteter Einheiten zu treffen, beispielsweise die Entscheidung, ob für einen Kanal oder für mehrere Kanäle eine Bearbeitung (mit Demodulation und Modulation oder nur mit Frequenzumsetzung) vorzunehmen ist.

Die Steuereinheit 6 stellt das "Gehirn" des erfindungsgemäßen Systems dar und erhält Informationen von der Spektralanalyse-Einheit 1, von der Geolokalisierungseinheit 2, von der Einheit 5 zur Messung der Qualität von Eingangssignalen, von der Einheit 8 zur Messung der Qualität von Ausgangssignalen, von den Datenbasen 3, 31 oder 32, von der Benutzerschnittstelle 7, und mittels entsprechender notwendiger Algorithmen trifft sie Entscheidungen, die die Konfiguration der Einheit 4, der Prozessoreinheit 42, der Einheit 43 zum Filtern und zur Equalifizierung, und der Verstärkungseinheit 44 und der Verstärkung 44 des Systems ermöglichen.
Die Steuereinheit 6 unterscheidet zwischen gewünschten Signalen und nicht gewünschten Signalen (die möglicherweise Störsignale sind). Dies erfolgt mittels der Information, die von der Spektralanalyseneinheit 1 kommt, von der Geolokalisierungseinheit 2, von der Datenbasis 3, die aus der Datenbasis 31 mit Installationsdaten und aus der Basis 32 der Daten radioelektrischer Dienste besteht.

Für den Fall, dass das System nicht über eine Verbindung zu dem Internet verfügt oder nicht über eine Information in der Datenbasis 31, so bestimmt die Benutzerschnittstelle 7 die gewünschten Signale, wobei der Steuereinheit 6 gestattet wird, die Konfigurationsentscheidungen zu treffen.

Die Steuereinheit 6 erhält die Information über die Qualität der Signale am Eingang N der Einheit 5 zur Messung der Qualität von Eingangssignalen, um die entsprechenden Maßnahmen in Abhängigkeit der erkannten Störung zu treffen, wie beispielsweise, ohne jede Einschränkung, ein selektiveres Filtern, die Verwendung zusätzlicher Filterstufen oder Stufen für dynamisches Filtern.

Auch lassen sich beispielsweise dynamische Bandsperren einfügen, die auch im Fall von Störungen zwischen den gewünschten Kanälen verwendet werden können, wie dies im Fall der dynamischen Zuordnungen der Frequenzen für WSD und ähnliches vorliegt.

Die Steuereinheit 6 erhält eine Information von der Einheit 5 zur Messung der Qualität von Eingangssignalen, die auch den Benutzer über mögliche Maßnahmen in Bezug auf die Empfangsantennen oder die Bearbeitung der Signale informiert.

Die Prozessoreinheit 42 ermöglicht es, bei Bedarf, Frequenzen zu ändern, beispielsweise in dem Fall, dass ein bestimmter Kanal oder bestimmte Kanäle sehr durch Störungen betroffen sind (Co-Kanal oder benachbarter Kanal), die die Einheit 41 zur Vorverstärkung und Vorfilterung nicht lösen kann. Dieser Prozess kann durchgeführt werden, ohne den Ausgangskanal zu ändern (in diesem Fall ist es nicht erforderlich, den Fernsehempfänger oder die Fernsehempfänger, die an das Verteilungsnetz angeschlossen sind, erneut zu syntonisieren) oder den Ausgangskanal auf einen Bereich mit wenigen Störungen zu ändern. Der Prozess kann auch eine Demodulation oder eine Modulation (Transmodulation) implizieren. In diesem letzten Fall oder wenn die Transmodulation eine Änderung des Kanals impliziert, ist es erforderlich, die Änderung der Dienste den Benutzern mittels der entsprechenden Signalisierung mitzuteilen, was beispielsweise mittels der Techniken "barker channel", erfolgen kann, durch Hinweise in anderen Kanälen, durch eine Internetverbindung im Fall sogenannter Smart TVs, etc.

Die Steuereinheit 6 wirkt auf die Einheit 8, wobei dies in unterschiedlicher Weise erfolgen kann. beispielsweise über die Information, die in die Benutzerschnittstelle 7 eingegeben wird, in automatischer Form über die Information, die man von der Datenbasis 31 der Installationsdaten erhält, von der Analyse des radioelektrischen Spektrums, von der Geolokalisierungseinheit und von der Information der Datenbasis 32 der Daten radioelektrischer Dienste.

Die Filter- und Equalifizations-Einheit 43, die wenigstens ein Filterelement enthält, ermöglicht es durch selektives Filtern der vorliegenden Signale, die als gewünschte Signale identifiziert und klassifiziert sind, die später in einem Prozess der Equalifization und/oder in einem Prozess der Preemphasis bearbeitet werden. Das beziehungsweise die Filterelemente können dem Benutzer zugeordnet sein über die Benutzerschnittstelle 7 oder durch die Steuereinheit 6 in automatischer Form.

Die Filter- und Equalifizations-Einheit 43 gestattet es daher, eine Equalifization durchzuführen, um die Pegel der Eingangssignale auszugleichen, die als gewünscht identifiziert und klassifiziert sind und außerdem eine Preemphasis hinsichtlich dieser Pegel durchzuführen, um die Verluste des Koaxialkabels mit der Frequenz zu kompensieren. Schließlich hebt die Verstärkungseinheit 44 den Pegel des Signals auf die Werte, die der Benutzer mittels der entsprechenden Mittel programmiert, dies im lokalen Betrieb (Benutzerschnittstelle 7) als auch im Fernbetrieb.

Das System verfügt über einen lokalen Algorithmus der Benutzerschnittstelle für die Programmierung der notwenigen Betriebsparameter der zuvor generierten Information, die Signale als gewünscht oder nicht gewünscht identifiziert und klassifiziert. Diese Daten können beispielsweise ohne irgendeine Einschränkung sein: gewünschte Kanäle, Pegel der angeforderten Kanäle und Pegel der Signalqualität. Außerdem verfügt die Benutzerschnittstelle über eine Visualisierungseinheit 71, die es ermöglicht, eine Information hinsichtlich der Signalpegel und/oder der Parameter zu erhalten und zu visualisieren, die die Einheit 5 zur Messung der Qualität von Eingangssignalen und/oder die Einheit 8 zur Messung der Qualität von Ausgangssignalen generiert haben.

Das System kann jedoch auch in automatischer Form mit den Daten arbeiten, die von Eingangsinformationseinheiten stammen: Spektralanalyseneinheit 1, Geolokalisierungseinheit 2, Einheit 5 zur Messung der Qualität von Eingangssignalen und Einheit 8 zur Messung der Qualität von Ausgangssignalen

In einer bevorzugten Ausführungsform arbeitet das System mit Signalpegeln und/oder Qualitätsparametern, die den entsprechenden rechtlichen Regelungen folgen beispielsweise im Fall von Spanien dem "Reglamento de Infraestructuras Comunes de Telecomunicación ICT" (Ausführungsverordnung der gemeinsamen Infrastrukturen der Telekommunikation ICT), geregelt durch das Real Decreto (Königliches Dekret) Nr. 346/2011, vom 11. März 2011) und folgt zusätzlich der weiteren Information hinsichtlich gewünschter Kanäle in der Benutzerschnittstelle 7 seitens des Telekommunikationsinstallateurs. Später arbeitet das System in dynamischer Form, wobei die Parameter der Bearbeitung / des Filterns / der Verstärkung den sich ändernden Bedingungen des Spektrums in dem Bereich, in dem der Betrieb des Systems folgen, dies in Abhängigkeit der entsprechenden Information, die von der Spektralanalyseneinheit 1 stammt.

In einem weiteren Ausführungsbeispiel gemäß der Erfindung arbeitet das System in automatischer Form, wobei es eine Information über gewünschte Kanäle über eine Verbindung zu der Datenbasis 31 mit den Installationsdaten 31 erhält, wobei als Einstieg die Daten der Geolokalisierungseinheit 2 des Systems berücksichtigt werden. Ausgehend von dieser Information passt das System die Parameter der Bearbeitung / des Filterns / der Verstärkung den sich ändernden Bedingungen des Spektrums in dem Bereich an, in dem der Betrieb des Systems erfolgt, dies entsprechend der Information, die von der Spektralanalyseneinheit 1 stammt.

In einer weiteren Ausführungsform der Erfindung wird das System mit einer Webseite verbunden und nach Prüfung der entsprechenden Berechtigung Software heruntergeladen, um Aktualisierungen der Software zu erhalten, die den verwendeten Algorithmus für die Bearbeitung / das Filtern / die Verteilung der TDT-Kanäle verbessern.

### Bezugszeichenliste

- A1: Omnidirektionale Antenne, Rundstrahlantenne
- A2: Richtantenne
- IN: Telekommunikationssignal-Eingang
- OUT: Telekommunikationssignal-Ausgang (Signale des terrestrischen Digital-Fernsehens)
- REF: Bezugseingang
- I1: erste Information zu radioelektrischen Diensten
- I2: zweite Information
- 1: Spektralanalyse-Einheit
- 2: Geolokalisierungseinheit
- 3: Datenbasis
- 31: Basis der Daten radioelektrischer Dienste (intern oder extern)
- 32: Basis der Installationsdaten
- 4: Einheit zur Signalauswahl und Signalanpassung
- 41: Einheit zur Vorverstärkung und Vorfilterung
- 42: Prozessoreinheit
- 43: Einheit zum Filtern und zur Equalifizierung (Entzerrung)
- 44: Verstärkungseinheit
- 5: Einheit zur Messung der Qualität von Eingangssignalen
- 6: Steuereinheit
- 7: Benutzerschnittstelle
- 71: Visualisierungseinheit
- 8: Einheit zur Messung der Qualität von Ausgangssignalen

## Patentansprüche

1. System zur Bearbeitung von Telekommunikationssignalen, insbesondere von Fernsehsignalen, mit wenigstens einem Telekommunikationssignal-Eingang (IN) mit wenigstens einem anliegenden Signal und mit wenigstens einem Bezugseingang (REF) mit wenigstens einem anliegenden Signal, wobei das wenigstens eine am Bezugseingang (REF) anliegende Signal am Telekommunikationssignal-Eingang (IN) anliegt, mit wenigstens einem Ausgang (OUT), und mit einer Steuereinheit (6), wobei
- das System eine Spektralanalyse-Einheit (1) aufweist, die eine Karte des radioelektrischen Spektrums von Signalen generiert, die am Bezugseingang (REF) anliegen,
- das System Daten enthält, die den geografischen Ort des Systems bezeichnen, sowie eine erste Information (I1), die an diesem geografischen Ort vorhandene radioelektrische Dienste bezeichnet,
- die Steuereinheit (6) in der Weise ausgestaltet ist, dass sie am Bezugseingang (REF) anliegende Telekommunikationssignale identifiziert und diese als gewünschte oder nicht gewünschte Signale klassifiziert,
- das Identifizieren und Klassifizieren der Telekommunikationssignale in einer ersten Alternative ausgehend von der Karte des radioelektrischen Spektrums der am Bezugseingang (REF) anliegenden Signale und der ersten Information (I1) der an diesem geografischen Ort vorhandenen radioelektrischen Dienste erfolgt oder
- das Identifizieren und Klassifizieren der Telekommunikationssignale in einer zweiten Alternative ausgehend von einer zweiten, vorab generierten Information (I2) erfolgt, die am Bezugseingang (REF) anliegende Telekommunikationssignale identifiziert und diese als gewünschte oder nicht gewünschte, am Bezugseingang (REF) anliegende Telekommunikationssignale klassifiziert,
**dadurch gekennzeichnet,**
- **dass** die Steuereinheit (6) in der Weise ausgestaltet ist, dass sie auf eine Einheit (4) zur Signalauswahl und Signalanpassung wirkt,
- **dass** die Einheit (4) zur Signalauswahl und Signalanpassung in der Weise ausgestaltet ist, dass sie die am Eingang (IN) des Systems anliegenden Telekommunikationssignale identifiziert und diese als gewünschte oder nicht gewünschte, am Eingang (IN) des Systems anliegende Signale klassifiziert, und
- **dass** sie diese Telekommunikationssignale mit Signalpegeln und vorgegebenen Qualitätsparametern so versieht, dass diese mit Signalpegeln und vorgegebenen Qualitätsparametern versehenen Telekommunikationssignale dem wenigstens einem Ausgang (OUT) des Systems zugeführt werden,
- **dass** die Einheit (4) zur Signalauswahl und Signalanpassung eine Einheit (41) zur Vorverstärkung und Vorfilterung aufweist, die Elemente aufweist, die Signale ausfiltern, die als nicht gewünschte Signale identifiziert und klassifiziert sind, und die Pegel der Signale anpassen, die als gewünschte Signale identifiziert und klassifiziert sind,
- **dass** die Einheit (4) zur Signalauswahl und Signalanpassung eine Prozessoreinheit (42) aufweist, die Elemente aufweist, die in vorgebbaren Fällen Operationen ausführen, mit denen die Qualität der Signale, die als gewünschte Signale identifiziert und klassifiziert sind, entsprechend einer vorgebbaren Qualität angepasst wird,
- **dass** die Einheit (4) zur Signalauswahl und Signalanpassung eine Einheit (43) zur Filterung und Equalifiizierung aufweist, die wenigstens eine Filtereinheit und Elemente aufweist, mit denen mittels eines selektiven Filterns die vorhandenen Signale, die als gewünschte Signale identifiziert und klassifiziert sind, ausgewählt werden, und die später einem Equalifizierungsprozess und/oder einem Preemphaseprozess unterzogen werden, und
- **dass** die Einheit (4) zur Signalauswahl und Signalanpassung eine Verstärkungseinheit (44) aufweist, die Elemente aufweist, die die als gewünscht identifizierten und klassifizierten Signale mit einem vorgebbaren Pegel versieht.

2. System nach Anspruch 1, **dadurch gekennzeichnet,**
- **dass** es eine erste Datenbasis (31) mit ersten Daten zu radioelektrischen Diensten aufweist,
- **dass** die erste Datenbasis (31 die ersten Informationen (I1) zu radioelektrischen Diensten enthält und mit der Steuereinheit (6) verbunden ist, die am Bezugseingang (REF) anliegende Telekommunikationssignale entweder als gewünschte oder als nicht gewünschte, am Bezugseingang (REF) anliegende Telekommunikationssignale identifiziert und klassifiziert.

3. System nach einem der vorstehenden Ansprüche, **dadurch gekennzeichnet,**
- **dass** es eine zweite Datenbasis (32) mit zweiten Daten zur Systemkonfiguration aufweist,
- **dass** die zweite Datenbasis (32) die zweite Information (I2) zu Signalen enthält, die als gewünschte oder nicht gewünschte, am Bezugseingang (REF) anliegende Telekommunikationssignale identifiziert und klassifiziert sind.

4. System nach einem der vorstehenden Ansprüche, **dadurch gekennzeichnet,**
- **dass** es eine Einheit (5) zur Messung der Qualität von Eingangssignalen aufweist, welche eine Information über Signalpegel und/oder Qualitätsparameter der am Eingang des Systems (IN) anliegenden Telekommunikationssignale generiert, die als gewünschte Signale identifiziert und klassifiziert sind.

5. System nach einem der vorstehenden Ansprüche, **dadurch gekennzeichnet,**
- **dass** es eine Einheit (8) zur Messung der Qualität von Ausgangssignalen aufweist, welche eine Information über Signalpegel und/oder Qualitätsparameter der an wenigstens einem Ausgang des Systems (OUT) anliegenden Telekommunikationssignale generiert.

6. *System* nach Anspruch 5, **dadurch gekennzeichnet,**
- **dass** die Steuereinheit (6) in der Weise ausgestaltet ist, dass sie auf die Einheit (4) zur Signalauswahl und Signalanpassung in Abhängigkeit der Information wirkt, die von der Einheit (5) zur Messung der Qualität von Eingangssignalen und/oder die von der Einheit (8) zur Messung der Qualität von Ausgangssignalen generiert wird.

7. System nach Anspruch 5 oder 6, **dadurch gekennzeichnet,**
- **dass** die Einheit (5) zur Messung der Qualität von Eingangssignalen und die Einheit (8) zur Messung der Qualität von Ausgangssignalen dieselbe Einheit ist.

8. System nach einem der vorstehenden Ansprüche, **dadurch gekennzeichnet,**
- **dass** es eine interne und/oder externe Geolokalisierungseinheit (2) aufweist, die Daten liefert, die den geographischen Ort des Systems bezeichnen.

9. System nach einem der vorstehenden Ansprüche, **dadurch gekennzeichnet,**
- **dass** es eine Benutzerschnittstelle (7) aufweist, die in der Weise ausgestaltet ist, dass an die Steuereinheit (6) eine systemexterne Information übermittelt wird, die am Bezugseingang (REF) anliegende Telekommunikationssignale identifiziert und diese als gewünschte oder nicht gewünschte Signale klassifiziert.

10. System nach Anspruch 9, **dadurch gekennzeichnet,**
- **dass** die Benutzerschnittstelle (7) in der Weise ausgestaltet ist, dass in das System die Information über die Signalpegel und/oder über Qualitätsparameter der am Eingang (IN) des Systems anliegenden, als gewünschte Signale identifizierte und klassifizierte Telekommunikationssignale eingefügt wird, die wenigstens einem Ausgang (OUT) des Systems zugeführt werden.

11. System nach Anspruch *9 oder 10,* **dadurch gekennzeichnet,**
- **dass** die Benutzerschnittstelle (7) eine Visualisierungseinheit (71) aufweist, die Signalpegel und/oder Qualitätsparameter der Telekommunikationssignale anzeigt, die am Eingang (IN) und/oder am Ausgang des Systems (OUT) anliegen.

12. System nach einem der vorstehenden Ansprüche, **dadurch gekennzeichnet,**
- **dass** eine erste Datenbasis (31) des Systems und/oder eine zweite Datenbasis (32) des Systems Daten aufweist, die den geografischen Ort des Systems und/oder von der Spektralanalyse-Einheit (1) generierte Daten bezeichnen entsprechend der Karte der radioelektrischen Dienste und/oder entsprechend von Signalpegeldaten und/oder von Qualitätsparameterdaten der Telekommunikationssignale, die an dem Eingang des Systems (IN) und/oder am Ausgang des Systems (OUT) anliegen.

13. System nach einem der vorstehenden Ansprüche, **dadurch gekennzeichnet,**
- **dass** die identifizierten und klassifizieren Telekommunikationssignale Signale des digitalen terrestrischen Fernsehens sind.

## Claims

1. System for processing telecommunications signals, in particular television signals, having at least one telecommunications signal input (IN) having at least one applied signal, and having at least one reference input (REF) having at least one applied signal, wherein the at least one signal that is applied at the reference input (REF) is applied at the telecommunications signal input (IN), and said system having at least one output (OUT), and having a control unit (6), wherein
- the system comprises a spectral analysis unit (1) that generates a chart of the radioelectric spectrum of signals that are applied at the reference input (REF),
- the system includes data that describes the geographical location of the system, and also a first information set (I1) that describes radioelectric services that are present at this geographical location,
- the control unit (6) is configured in such a manner that said control unit identifies telecommunications signals that are applied at the reference input (REF) and classifies these signals as desired or undesired signals,
- the telecommunications signals are identified and classified in a first alternative based on the chart of the radioelectric spectrum of the signals that are applied at the reference input (REF) and the first information set (I1) of the radioelectric services that are present at this geographical location or
- the telecommunications signals are identified and classified in a second alternative based on a second information set (I2) that is generated in advance and said second information set identifies the telecommunications signals that are applied at the reference input (REF) and classifies said signals as desired or undesired telecommunications signals that are applied at the reference input (REF),
**characterised in that**
- the control unit (6) is configured in such a manner that said control unit acts upon a unit (4) for selecting and adapting signals,
- the unit (4) for selecting and adapting signals is configured in such a manner that said unit identifies telecommunications signals that are applied at the input (IN) of the system and classifies said signals as desired or undesired signals that are applied at the input (IN) of the system, and
- said unit provides these telecommunications signals with signal levels and predetermined quality parameters in such a manner that these telecommunications signals that are provided with signal levels and predetermined quality parameters are supplied to the at least one output (OUT) of the system,
- the unit (4) for selecting and adapting signals comprises a unit (41) for pre-amplifying and pre-filtering signals and said unit comprises elements that filter out signals that have been identified and classified as undesired signals, and said elements adapt the level of the signals that have been identified and classified as desirable signals,
- the unit (4) for selecting and adapting signals comprises a processor unit (42) that comprises elements that in predetermined cases perform operations with which the quality of signals that have been identified and classified as desirable signals are adapted according to a predetermined quality,
- the unit (4) for selecting and adapting signals comprises a unit (43) for filtering and equalizing signals and said unit comprises at least one filter unit and elements with which the signals that are present and have been identified and classified as desired signals are selected by means of selectively filtering and said signals are subsequently subjected to an equalizing procedure and/or a pre-emphasis procedure, and
- the unit (4) for selecting and adapting signals comprises an amplifying unit (44) that comprises elements that provide the signals that are identified and classified as desired with a predetermined level.

2. System according to claim 1, **characterised in that**
- said system comprises a first database (31) having first data regarding radioelectric services,
- the first database (31) includes the first information set (I1) regarding radioelectric services and is connected to the control unit (6) that identifies and classifies telecommunications signals that are applied at the reference input (REF) either as desired or as undesired telecommunications signals that are applied at the reference input (REF).

3. System according to any one of the above claims, **characterised in that**
- said system comprises a second database (32) having second data regarding the system configuration,
- the second database (32) includes the second information set (I2) regarding signals that have been identified and classified as desired or undesired telecommunications signals that are applied at the reference input (REF).

4. System according to any one of the preceding claims, **characterised in that**
- said system comprises a unit (5) for measuring the quality of input signals and said unit generates information regarding the signal level and/or quality parameters of the telecommunications signals that are applied at the input (IN) of the system, said telecommunications signals having been identified and classified as desired signals.

5. System according to any one of the preceding claims, **characterised in that**
- said system comprises a unit (8) for measuring the quality of output signals and said unit generates information regarding the signal level and/or quality parameters of the telecommunications signals that are applied at the at least one output of the system (OUT).

6. System according to claim 5, **characterised in that**
- said the control unit (6) is configured in such a manner that it acts upon the unit (4) for selecting and identifying signals in dependence upon information that is generated by the unit (5) for measuring the quality of input signals and/or that is generated by the unit (8) for measuring the quality of output signals.

7. System according to claim 5 or 6, **characterised in that**
- the unit (5) for measuring the quality of input signals and the unit (8) for measuring the quality of output signals is the same unit.

8. System according to any one of the preceding claims, **characterised in that**
- said system comprises an internal and/or external geolocating unit (2) that provides data that describes the geographical location of the system.

9. System according to any one of the preceding claims, **characterised in that**
- said system comprises a user interface (7) that is configured in such a manner that system external information is transmitted to the control unit (6) and said information identifies telecommunications signals that are applied at the reference input (REF) and classifies said telecommunications signals as desired or undesired signals.

10. System according to claim 9, **characterised in that**
- the user interface (7) is configured in such a manner that the information regarding the signal level and/or the quality parameters of the telecommunications signals that are applied at the input (IN) of the system and have been identified and classified as desired signals are input into the system, said telecommunication signals being supplied to the at least one output (OUT) of the system.

11. System according to claim 9 or 10, **characterised in that**,
- the user interface (7) comprises a visualizing unit (71) that displays the signal level and/or quality parameters of the telecommunications signals that are applied at the input (IN) and/or at the output of the system (OUT).

12. System according to any one of the preceding claims, **characterised in that**
- a first database (31) of the system and/or a second database (32) of the system comprises data that describes the geographical location of the system and/or data that is generated by the spectral analysis unit (1) according to the chart of the radioelectric services and/or according to the signal level data and/or quality parameter data of the telecommunications signals, said telecommunication signals being applied at the input (IN) of the system and/or at the output (OUT) of the system.

13. System according to any one of the preceding claims, **characterised in that**
- the identified and classified telecommunications signals are digital terrestrial television signals.

## Revendications

1. Système destiné au traitement de signaux de télécommunication, en particulier de signaux de télévision, comprenant au moins une entrée de signaux de télécommunication (IN) avec au moins un signal appliqué et comprenant au moins une entrée de référence (REF) avec au moins un signal appliqué, l'au moins un signal appliqué à l'entrée de référence (REF) étant appliqué à l'entrée de signaux de télécommunication (IN), et comprenant au moins une sortie (OUT) et une unité de commande (6),
dans lequel
- le système comporte une unité d'analyse spectrale (1), qui génère une carte du spectre radioélectrique de signaux qui sont appliqués à l'entrée de référence (REF),
- le système contient des données qui désignent l'emplacement géographique du système, ainsi qu'une première information (I1), qui désigne des services radioélectriques disponibles à cet emplacement géographique,
- l'unité de commande (6) est conçue de telle manière qu'elle identifie des signaux de télécommunication appliqués à l'entrée de référence (REF) et les classe comme signaux souhaités ou non souhaités,
- l'identification et classification des signaux de télécommunication s'effectue selon une première alternative à partir de la carte du spectre radioélectrique des signaux appliqués à l'entrée de référence (REF) et de la première information (I1) des services radioélectriques disponibles à cet emplacement géographique ou
- l'identification et classification des signaux de télécommunication s'effectue selon une seconde alternative à partir d'une seconde information (12) générée préalablement, qui identifie des signaux de télécommunication appliqués à l'entrée de référence (REF) et les classe comme signaux de télécommunication souhaités ou non souhaités appliqués à l'entrée de référence (REF),
**caractérisé en ce**
- **que** l'unité de commande (6) est conçue de telle manière qu'elle agit sur une unité (4) destinée à la sélection des signaux et l'adaptation des signaux,
- **que** l'unité (4) destinée à la sélection des signaux et l'adaptation des signaux est conçue de telle manière qu'elle identifie les signaux de télécommunication appliqués à l'entrée (IN) du système et les classe comme signaux souhaités ou non souhaités appliqués à l'entrée (IN) du système, et
- **qu'**elle donne à ces signaux de télécommunication des niveaux de signal et des paramètres de qualité prédéfinis de telle sorte que ces signaux de télécommunication dotés de niveaux de signal et de paramètres de qualité prédéfinis sont transmis à l'au moins une sortie (OUT) du système,
- **que** l'unité (4) destinée à la sélection des signaux et l'adaptation des signaux comporte une unité (41) destinée à la préamplification et au préfiltrage, qui comporte des éléments qui filtrent des signaux qui sont identifiés et classés comme signaux non souhaités, et adaptent les niveaux des signaux qui sont identifiés et classés comme signaux souhaités,
- **que** l'unité (4) destinée à la sélection des signaux et l'adaptation des signaux comporte une unité centrale (42), qui comporte des éléments qui, dans des cas prédéfinissables, exécutent des opérations permettant d'adapter la qualité des signaux qui sont identifiés et classés comme signaux souhaités conformément à une qualité prédéfinissable,
- **que** l'unité (4) destinée à la sélection des signaux et l'adaptation des signaux comporte une unité (43) destinée au filtrage et à l'égalisation, qui comporte au moins une unité de filtrage et des éléments permettant, au moyen d'un filtrage sélectif, de sélectionner les signaux présents, qui sont identifiés et classés comme signaux souhaités, et qui sont ensuite soumis à un processus d'égalisation et/ou un processus de préaccentuation, et
- **que** l'unité (4) destinée à la sélection des signaux et l'adaptation des signaux comporte une unité d'amplification (44), qui comporte des éléments qui donnent un niveau prédéfinissable aux signaux identifiés et classés comme souhaités.

2. Système selon la revendication 1, **caractérisé en ce**
- **qu'**il comporte une première base de données (31) avec des premières données concernant des services radioélectriques,
- **que** la première base de données (31) contient les premières informations (I1) concernant des services radioélectriques et est reliée à l'unité de commande (6), qui identifie et classe des signaux de télécommunication appliqués à l'entrée de référence (REF) comme signaux de télécommunication soit souhaités soit non souhaités appliqués à l'entrée de référence (REF).

3. Système selon l'une des revendications précédentes, **caractérisé en ce**
- **qu'**il comporte une seconde base de données (32) avec des secondes données concernant la configuration du système,
- **que** la seconde base de données (32) contient la seconde information (12) concernant des signaux qui sont identifiés et classés comme signaux de télécommunication souhaités ou non souhaités appliqués à l'entrée de référence (REF).

4. Système selon l'une des revendications précédentes, **caractérisé en ce**
- **qu'**il comporte une unité (5) destinée à la mesure de la qualité de signaux d'entrée, qui génère une information concernant des niveaux de signal et/ou paramètres de qualité des signaux de télécommunication appliqués à l'entrée (IN) du système, qui sont identifiés et classés comme signaux souhaités.

5. Système selon l'une des revendications précédentes, **caractérisé en ce**
- **qu'**il comporte une unité (8) destinée à la mesure de la qualité de signaux de sortie, qui génère une information concernant des niveaux de signal et/ou paramètres de qualité des signaux de télécommunication appliqués à au moins une sortie (OUT) du système.

6. Système selon la revendication 5, **caractérisé en ce**
- **que** l'unité de commande (6) est conçue de telle manière qu'elle agit sur l'unité (4) destinée à la sélection des signaux et l'adaptation des signaux en fonction de l'information qui est générée par l'unité (5) destinée à la mesure de la qualité de signaux d'entrée et/ou par l'unité (8) destinée à la mesure de la qualité de signaux de sortie.

7. Système selon la revendication 5 ou 6, **caractérisé en ce**
- **que** l'unité (5) destinée à la mesure de la qualité de signaux d'entrée et l'unité (8) destinée à la mesure de la qualité de signaux de sortie est la même unité.

8. Système selon l'une des revendications précédentes, **caractérisé en ce**
- **qu'**il comporte une unité de géolocalisation (2) interne et/ou externe, qui fournit des données qui désignent l'emplacement géographique du système.

9. Système selon l'une des revendications précédentes, **caractérisé en ce**
- **qu'**il comporte une interface utilisateur (7), qui est conçue de telle manière qu'une information externe au système est transmise à l'unité de commande (6), ladite information externe au système identifiant des signaux de télécommunication appliqués à l'entrée de référence (REF) et les classant comme signaux souhaités ou non souhaités.

10. Système selon la revendication 9, **caractérisé en ce**
- **que** l'interface utilisateur (7) est conçue de telle manière que l'information concernant les niveaux de signal et/ou concernant des paramètres de qualité des signaux de télécommunication identifiés et classés comme signaux souhaités appliqués à l'entrée (IN) du système, et qui sont transmis à au moins une sortie (OUT) du système, est introduite dans le système.

11. Système selon la revendication 9 ou 10, **caractérisé en ce**
- **que** l'interface utilisateur (7) comporte une unité de visualisation (71), qui affiche les niveaux de signal et/ou les paramètres de qualité des signaux de télécommunication qui sont appliqués à l'entrée (IN) et/ou à la sortie (OUT) du système.

12. Système selon l'une des revendications précédentes, **caractérisé en ce**
- **qu'**une première base de données (31) du système et/ou une seconde base de données (32) du système comporte des données, qui désignent l'emplacement géographique du système et/ou des données générées par l'unité d'analyse spectrale (1) conformément à la carte des services radioélectriques et/ou conformément à des données de niveaux de signal et/ou à des données de paramètres de qualité des signaux de télécommunication, qui sont appliqués à l'entrée (IN) du système et/ou à la sortie (OUT) du système.

13. Système selon l'une des revendications précédentes, **caractérisé en ce**
- **que** les signaux de télécommunication identifiés et classés sont des signaux de la télévision numérique terrestre.
